**Europäisches Patentamt**

**European Patent Office**

**Office européen des brevets**

(11) Publication number: **0 119 973**

**B1**

(12) **EUROPEAN PATENT SPECIFICATION**

(45) Date of publication of patent specification: **26.08.87**

(51) Int. Cl.⁴: **G 06 F 9/46**

(21) Application number: **84850072.4**

(22) Date of filing: **06.03.84**

(54) Apparatus for load regulation in computer systems.

(30) Priority: **18.03.83 SE 8301507**

(43) Date of publication of application:
**26.09.84 Bulletin 84/39**

(45) Publication of the grant of the patent:
**26.08.87 Bulletin 87/35**

(84) Designated Contracting States:
**CH DE FR GB LI NL**

(56) References cited:
**GB-A-1 452 865**
**SE-B- 309 334**
**US-A-3 996 567**
**US-A-4 314 335**

**IEEE TRANSACTIONS ON COMMUNICATIONS,
vol. COM-30, no. 1, January 1982, pages
172-184, M. SCHWARTZ, "Performance
Analysis of the SNA Virtual Route Pacing
Control"**

(73) Proprietor: **TELEFONAKTIEBOLAGET L M
ERICSSON**
**S-126 25 Stockholm (SE)**

(72) Inventor: **Andersen, Ib Nörholm
Norrvägen 16 B
S-142 00 Trangsund (SE)**

(74) Representative: **Hedberg, Sten Torsten et al
Telefonaktiebolaget L M Ericsson
S-126 25 Stockholm (SE)**

## Description

### Technical Field

Apparatus in a computer-controlled telecommunication system for carrying out load regulation with the aid of a queuing system in transferring data information between a regional processor (RP) and a central processor (CP), for ensuring that all program levels in the central processor are guaranteed a positive share of the processor capacity.

### Background Art

A queuing method for controlling congestion, in a SNA network (Systems network architecture) is described in an article from IEEE Transactions on Communications, Vol. Com-30, No 1, January 1982, "Performance Analysis of the SNA Virtual Route Pacing Control" by Mischa Schwartz.

### Disclosure of Invention

The intention of the invention is, for reasons of capacity, to relieve the central processor of certain work, e.g. such as relates to call signals, alarm signals, etc. The central processor receives signals through job buffers with different priorities, and it never serves a low priority job buffer until all job buffers with higher priority are empty. During high traffic intensity, when the central processor does not manage to empty all job buffers with high priority, there is obtained in the prior art an overload of the job buffers at lower levels, since signals are being queued there that the processor is unable to serve.

The apparatus in accordance with the invention is characterized in the claims and solves the problem by establishing queues with the aid of so-called baskets which, on emptying through associated buffers, guarantee an interruption in the processing of signals on higher program levels and enable processing of signals on lower levels instead.

The method of operation can be symbolically described with the aid of tickets, coupons and paper baskets, designations usual within the art. The counterpart of these in an apparatus are different signals and memory devices.

### Description of Figures

The apparatus in accordance with the invention will now be described in detail with the aid of an embodiment and with reference to the accompanying drawing, on which

Figure 1 is a block diagram illustrating an example of an unregulated system,

Figure 2 is a block diagram of a system with load regulation,

Figure 3 is a block diagram illustrating in a simplified form the principle for load regulation with the aid of tickets, coupons and baskets,

Figure 4 illustrates a regulator in block diagram form,

Figure 5 is a block diagram for a system in which the apparatus in accordance with the invention is incorporated,

Figure 6 illustrates how a regulator member is constructed, and

Figure 7 illustrates the construction of a regulator member for the lowest program level N.

### Mode for Carrying Out the Invention

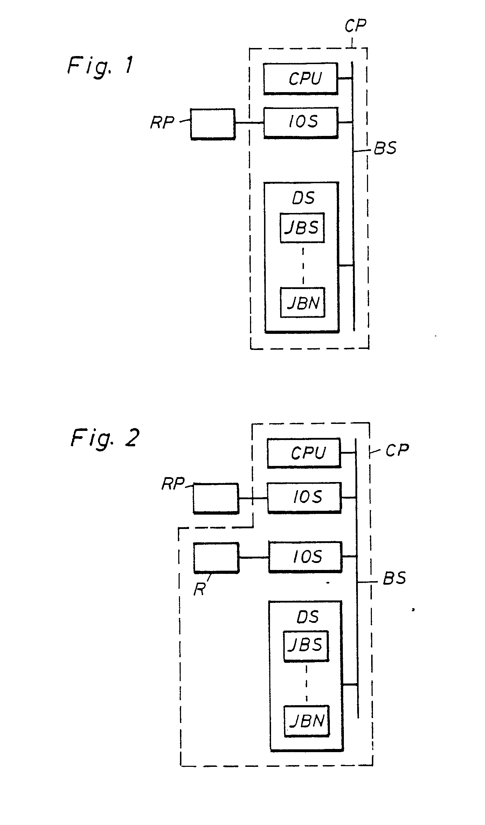

Figure 1 illustrates an example of an unregulated system known in the art, e.g. that which is embraced by the computer part APZ210 in the stored program controlled telephone exchange AXE10 made by LM Ericsson. The system consists of a central processor CP including a control unit CPU, one or more input/output systems IOS, connected to a common data memory DS through a bus system BS. The IOS units can constitute regional processor-handlers RPH. one or more external units RP may be connected to an IOS system, which can receive information from the unit RP, e.g. when reading test points in said unit, the IOS system can furthermore send information to the external unit RP, e.g. when writing operation points into the unit.

The IOS system forwards a signal from the unit RP to the control unit CPU by writing in a job in a job buffer JB in the data memory DS. From the format aspect, a job consists of a head and an information part. The head identifies the job, e.g. gives the address to the unit RP. The information part contains other data, e.g. the content of the test points. A job buffer is a part of the data memory DS and is organized as a first in—first out (FIFO) queue of jobs.

The system is characterized by
— the number of job buffers being at least 2
— the central processor CP serving the job buffers in order of priority

Serving in priority order means that the central processor CP does not read out any job from the buffer JBx as long as a buffer JBy (where y<x) contains a job. The central processor sends signals to the unit RP via the IOS system. The information can either be sent directly to the IOS system or via a job buffer in the data memory DS. It is assumed further to be known how the data flow from a transmitter RP to a receiver CP can be regulated with the aid of "tickets" or "windows", e.g. in accordance with the standardized data communication protocols HDLC, X.25 and SDLC (IBM). The regulation principle is that the transmitter may have at most a given number of signals outstanding without acknowledgement (the window filled to its upper edge). As soon as the receiver is ready to receive new signals, it acknowledges the old ones (rotates the window).

Figure 2 illustrates how the receiver CP, in accordance with the invention, is provided with a special regulator R determining at what time the processor CP will send the acknowledgement signal to the transmitter RP. The regulator comprises a plurality of regulator members, one for each of the job buffers JBs, JBs + 1, .... JBN, where JBs denotes the buffer which receives the signals from the transmitter RP.

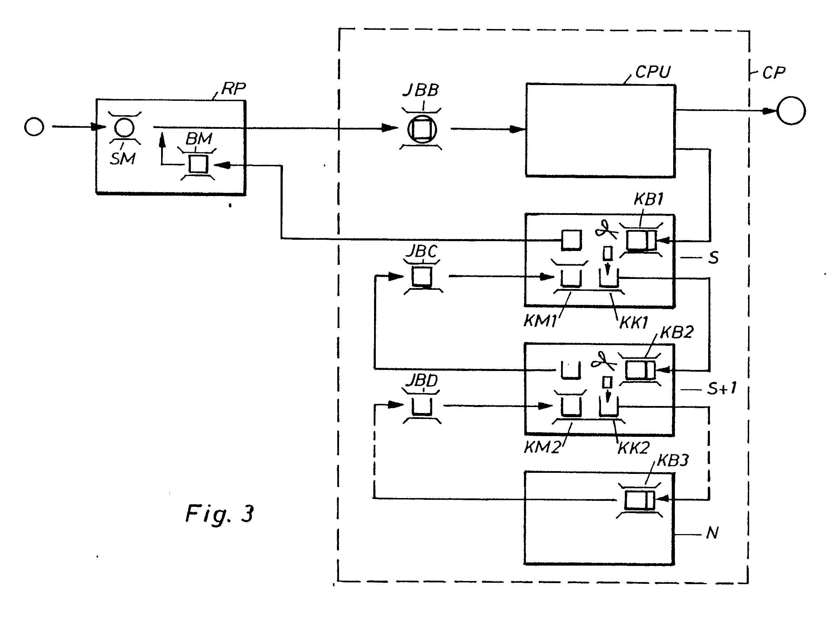

The operation of an embodiment of the invention is symbolically illustrated in Figure 3. As will be seen from the figure, the apparatus contains, according to the selected embodiment in a receiver CP, three job buffers JBB, JBC and JBD, each of which is utilized at a determined program level, where JBB is used at the highest level and JBD at the lowest. A regulator member is associated with each buffer, and each member contains a plurality of memory means for storing received signals. A sequence according to Figure 3 is described below.

Signals are received and stored in a signal memory (signal queue) SM in a transmitter RP (Regional Processor). The transmitter also contains a ticket memory (ticket queue) in the form of a counter BM. Symbolically, the counter value indicates the number of tickets present in the transmitter, each ticket permitting the transmitter to transmit one signal. Some implementations may assign sequence numbers or other data to the "tickets" and store them using other memory structures, e.g. FIFO memories, linked lists or stacks, but this is immaterial to the invention. The signal queue and the ticket queue are scanned, and when both a signal is present in the signal queue and BM is greater than zero, BM is decremented by one and a signal is sent from the transmitter RP to the receiver CP via a job buffer JBB in the receiver. Symbolically, the signal is sent with a ticket. The signal in the buffer JBB is processed by the receiver CP which then forwards the signal to the desired receiver and furthermore sends another signal to the "ticket" inlet in a load regulator member S. Figure 3 shows the "ticket" inlet as the inlet terminating in a queue labeled KB1. Symbolically, CP separates signal and ticket, forwards the signal to the desired receiver and the ticket to load regulator member S.

Load regulator member S contains three counters labeled KB1, KM1 and KK1 in figure 3. They are called "coupon-ticket-queue", "basket-queue" and "coupon counter", respectively. Symbolically, KB1 indicates the number of unused tickets present in S, KM1 indicates the number of waste-paper baskets present in S, and KK1 indicates the number of coupons clipped from used tickets into respective baskets being filled. Some implementations may assign sequence numbers or other data to tickets, coupons and baskets and store them using other memory structures, but this is immaterial to the invention.

On the condition that in scanning KB1 and KM1 are both greater than zero the regulator member S will decrement KB1 by one, increment KK1 by one and send a signal to the "ticket" inlet in the sender RP. Figure 3 shows this ticket inlet in RP as the inlet terminating in the ticket memory BM. Symbolically, the regulator member S takes a ticket from the coupon-ticket queue, cuts (cf scissors in fig. 3) the coupon into a basket and forwards the ticket to the sender RP. When the coupon counter KK1 reaches its maximum value, ten according to the embodiment here, it will return to zero producing a carry signal which decrements the coupon-basket-queue KM1 by one and also is forwarded to the "ticket" inlet in the next regulator member S + 1 in figure 3. Figure 3 shows this ticket inlet as the inlet terminating in a queue labeled KB2. Symbolically, when the basket queue becomes full it is passed from regulator member S to S + 1 for emptying. KM1 greater than zero means that baskets are present in S so that coupon clipping and ticket forwarding can take place. MI1 equal to zero means that no baskets are present in S and no coupon clipping and ticket fowarding takes place. This mechanism will force the central processor CP to give job buffer JBC some service, because in the absence of baskets in regulator member S, S will stop passing tickets to the sender RP, the sender RP will stop queueing signals in job buffer JBB, the CP will empty JBB and then serve job buffer JBC. Eventually, serving JBC the CP will find a signal there identified by its header as a "ticket" from regulator member S + 1 to the "basket" inlet in regulator member S. Figure 3 shows this basket inlet as the inlet terminating in the basket queue KM1. On receiving this signal regulator member S will increment by one its basket queue KM1 and, on condition that the coupon-ticket queue KB1 is not empty start clipping coupons and passing tickets to the sender RP as described above. Then the sender RP will start queueing signals in JBB, and the CP will again serve JBB. The maximum number of coupons per basket queue determines the ratio between CP capacity spent on serving JBB and JBC.

The "coupon basket queue" KB2 is also a counter, and on receipt of the carry signal from KK1 it is incremented by one. Symbolically, the received basket is replaced by a ticket that is queued in KB2. The regulator member S + 1 also contains a "basket queue" KM2 and a "coupon counter" KK2 both consisting of counters. On condition that KB2 and KM2 are both greater than zero regulator member S + 1 will decrement KB2 by one, increment KK2 by one and queue a signal in job buffer JBC. The header of the latter signal identifies it as a "ticket" destined for the basket queue KM1 in regulator member S. Symbolically this means that on condition that both a ticket and a basket are present in regulator member S + 1 S + 1 will cut the coupon of the ticket into a basket and forward the ticket.

When the coupon counter KK2 reaches its maximum value, ten according to the embodiment here, it will return to zero producing a carry signal which decrements the coupon-basket-queue KM2 by one and also is fowarded to the "ticket" inlet in the third regulator member, N in figure 3. This is taken to be the last member in the chain of members and is not equipped as the others. Figure 3 shows the ticket inlet as the inlet terminating in a queue labeled KB3. Symbolically, when the basket becomes full it is passed from regulator member S + 1 to N for emptying. KM2 greater than zero means that baskets are present in S + 1 so that coupon clipping and ticket forwarding can take place. KM2 equal to zero means that no baskets are present in S + 1 and no coupon clipping and ticket forwarding takes place. This mechanism will force the central processor CP to give job buffer JBD some service, because in the absence of baskets in regulator member S + 1, S + 1 will stop passing tickets through job buffer JBC to regulator member S, the CP will empty JBC and then serve job buffer JBD. Eventually, serving JBD the CP will find a signal there identified by its header as a "ticket" from regulator member N to the "basket" inlet in regulator member S + 1. Figure 3 shows this basket inlet as the inlet terminating in the basket queue KM2. On receiving this signal regulator member S + 1 will increment by one its basket queue KM2 and, on condition that the coupon-ticket queue KB2 is not empty start clipping coupons and passing tickets to JBC as described above, and the CP will again serve JBC. The maximum number of coupons per basket determines the ratio between CP capacity spent on serving JBC and JBD.

The "coupon basket queue" KB3 is also a counter, and on receipt of the carry signal from KK1 it is incremented by one. Symbolically, the received basket is replaced by a ticket that is queued in KB3. On condition that KB3 is greater than zero regulator member N will decrement KB3 by one and queue a signal in job buffer JBD. The header of the latter signal identifies it as a "ticket" destined for the basket queue KM2 in regulator member S + 1. Symbolically this means that a basket received from regulator member S + 1 is returned immediately through job buffer JBD.

The job buffers are scanned in priority order by the control unit CPU.

If there is no information in the buffer JBB, it is then the turn of the buffer JBC. If the ticket signal occurs first in JBC, this signal is read out from JBC and steps the associated KM basket queue one step up. Thus when there is a signal in the KM basket queue and the condition is met that a signal is also available in the coupon-ticket queue KB, a ticket is sent to the ticket counter BM of the transmitter RP, as previously described, the counter BM then being counted up one step. The sequence is hereby terminated and starts again with transmission of a signal and ticket from the transmitter RP to the receiver CP when a signal occurs in the signal memory of the transmitter. When there is no information in the buffers JBB and JBC, it is then the turn of the buffer JBD. If a ticket signal is first available in the buffer, JBD, it is read out from the buffer and steps the associated basket queue counter KM2 one step up. Thus when there is a signal in the basket queue KM2 and the condition is met that there is also a signal in the coupon-ticket queue KB2, a ticket signal is sent to the buffer memory JBC.

In the buffer JBC, for example, there can be other jobs which do not affect the paper basket. The jobs are executed in turn, and it is when the turn has come to the paper basket signal that the basket queue counter KM is stepped forward. This also applies, of course, for execution of the jobs in the remaining job buffers. As will be seen from the description, ten coupons are stored in the basket KK1 while ten baskets are stored in the basket KK2, each of the baskets corresponding in time to ten coupons.

Program execution is enabled at all program levels with the aid of the described sequence. By suitable selection of the number of coupons in the coupon baskets, the time may be determined when work at a lower level may be started at the earliest, and thereby a suitable relationship between different levels may be obtained.

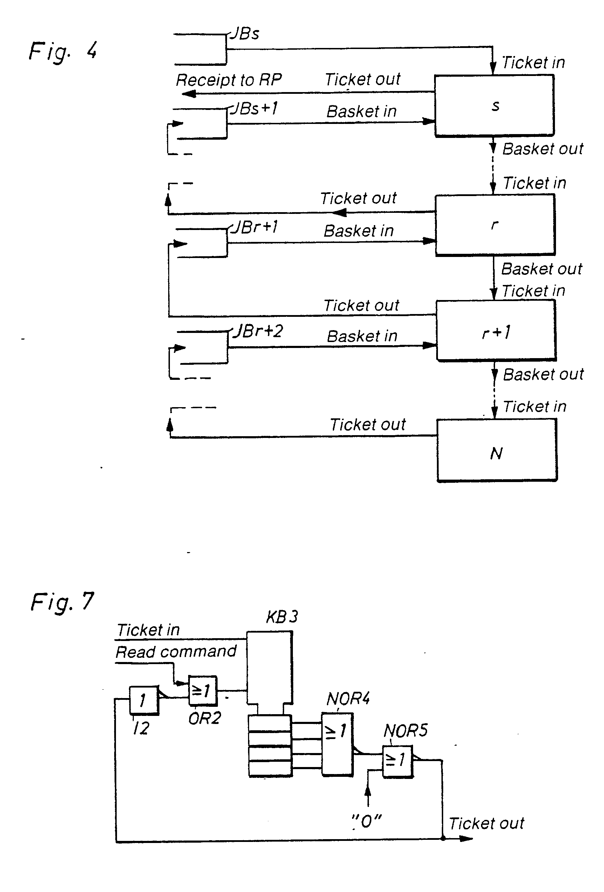

Figure 4 is a block diagram of an apparatus in accordance with the invention. A plurality of job buffers, JBs—JBN are connected to a regulator unit made up from a plurality of regulator members s—N. Each regulator member x where x<N has two inputs: "ticket in", "basket in", and two outputs: "ticket out" and "basket out". The regulator member N has a "ticket in" input and a "ticket out" output.

The inputs and outputs of the different members are connected to form a complete regulator as illustrated in Figure 4. The dashed lines between the members s and r and between the members r + 1 and N denote that more members than those drawn in can be used. The dashed lines between member r and job buffer JBS + 1 and between the member N and job buffer JBR + 2 denote that more job buffers than the ones drawn in can be used, since one job buffer corresponds to each member. "The "ticket in" input on member s receives a "receive ticket" signal from the central processor CP when this reads out a job from the job buffer JBs which comes from the regional processor RP.

A "send ticket to RP" signal (acknowledgement signal) is sent from the "ticket out" output to the processor CP. The "basket in" input on the member s receives the "basket signal" via the job buffer JBs + 1 from the output "ticket out" on the member s + 1 (not shown on the figure). The "basket out" output on the member s sends the "basket" signal to the "ticket in" input on element S + 1.

In the member r where s<r<N, the "ticket in" input receives the "basket" signal from the "basket out" output on the member r—1. The "ticket-out" output sends the basket signal via the buffer JBr to the "basket in" input on the regulator member r−1. The "basket in" input on the member r receives the basket signal via the buffer JBr + 1 from the "ticket out" output on the member r + 1. The "basket out" output sends the basket signal to the "ticket in" input on the member r 1. Finally, on the member N the "ticket in" input receives a "basket signal", from the "basket out" output on th emember N + 1. The "ticket out" output sends the basket singal through a job buffer JBN to the "basket in" input on the member N—1. The sequence can be compared with that described symbolically in Figure 3, in which fewer members participate, however.

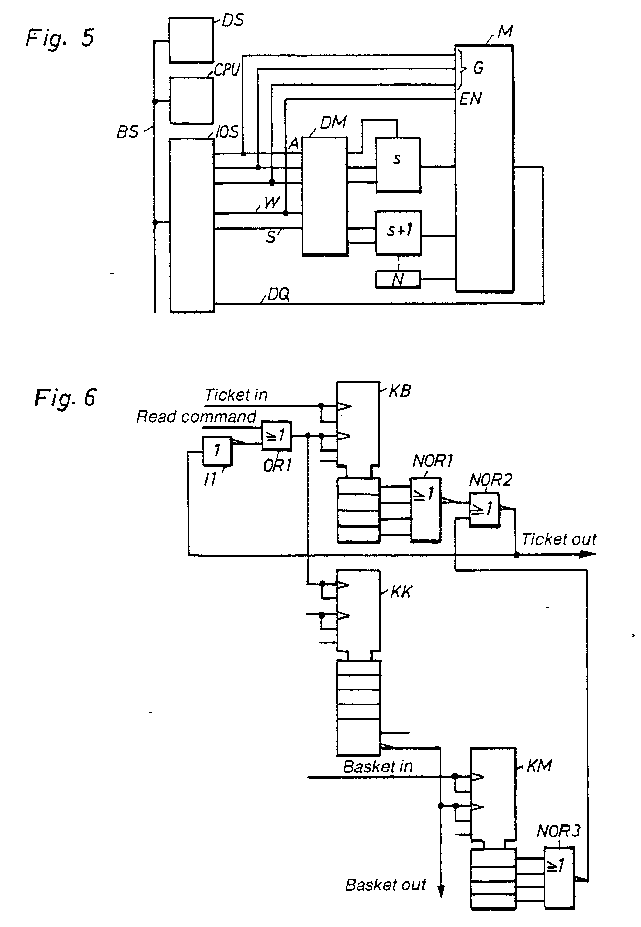

A block diagram is illustrated in Figure 5 for a system in which the apparatus according to the invention is included. A data member DS, e.g. of the type TMS 4044 containing a plurality of job buffers JBS—JBN, an input/output means IOS and the control unit CPU is the central processor, is connected to a common information transmission bus BS. Outputs from the unit IOS are connected to the inputs on a type 74LS138 demultiplexor DM and also to the inputs on a type 74LS151 multiplexor M. The inputs of the mentioned regulator members s—N are connected to outputs on the demultiplexor DM. The outputs from the members s—N are connected to further inputs on said multiplexor M, the output of which is connected to an input DQ on said means IOS.

Sending out ticket signals from the regulator members to the control unit CPU via the input/output system IOS is preceded by the unit IOS scanning and reading points in the regulator. According to the embodiment a logical one "1" means that there is a signal at the point read out. A logical zero "0" means that there is no signal. When the unit IOS reads a one at a point, it conventionally writes in a job in a job buffer. The corresponding counter is accordingly stepped down one step. Reading out symbolically corresponds to the unit IOS taking a ticket basket from the regulator and moving it to the job buffer.

As will be seen from Figure 5, the unit IOS (properly speaking the control unit CPU through the unit IOS) writes into the regulator by:

— an address being put out on the address wires A where the address points out the right regulator member,

— a read/write wire W is put to low level L, whereby a given input to the regulator member is pointed out,

— a pulse is put on the selector wire S, whereon the addressed counter is stepped up one step.

The signals on the wires A and W set demultiplexor DM such that the pulse on the S wire goes to the "basket in" input on the correct member or to the "ticket in" wire in the member S. The wire DQ is not used in writing into the regulator.

The unit IOS reads into the regulator by;

— an address being sent to the address wires A for pointing out the regulator member,

— the read/write wire W being put to high level H, another input to the regulator being pointed out,

— the selector wire S being activated with a pulse, whereon the ticket counter in the regulator member is stepped down and the coupon counter stepped up one step. The signals on the wires A and W set the demultiplexor DM such that the pulse on the S wire goes to the "read ticket" input on the right member. The signals on the A wires furthermore set the multiplexor M such that it connects the right "ticket out" output with the wire DQ. During the time the S pulse is of low level the information from the read-out point is available on the DQ wire. When the S pulse is changed to high level, the counter of the read-off pulse is stepped down one step. If the counter is set to zero no stepping takes place.

Figure 6 shows how a regulator member is constructed. The illustrated member may be the member r (Figure 4) for example, i.e. not the member corresponding to the lowest program level (N).

A coupon-ticket memory KB in the form of a type 74LS193 counter receives ticket signals on its "ticket in" input in the form of pulses from either job buffers via the control unit CPU or from the "basket out" output on the preceding member. When the signal on the "ticket in" input changes level from low (L) to high (H) the counter KB is stepped up one step, corresponding to a coupon-ticket being put into the coupon-ticket memory.

A basket memory KM in the form of a type 74LS193 counter receives basket signals on a "basket in" input from the job buffer via the control unit CPU. When the signal on the "basket in" input changes level from low (L) to high (H) the counter KM is stepped up one step, corresponding to a basket being put into the basket memory.

The outputs of the counter KB are connected to corresponding inputs on an NOT—OR circuit NOR 1, the output of which is connected to a first input of a second NOT—OR circuit NOR 2.

The outputs of the counter KM are connected to corresponding inputs on a third NOT—OR circuit NOR 3, the output of which is connected to a second input on said NOT—OR circuit NOR 2.

If either of the counters KB or KM is set to zero, i.e. the corresponding queue is empty, the output signal from the NOT—OR circuit NOR 2 is set to low level condition (logical zero). When both counters are separated from zero, i.e. none of the queues is empty, the output signal from the circuit NOR 2 is set to high level condition (logical one). The output from the circuit NOR 2 is connected to the input on an inverting circuit I1, the output of which is connected to one input on an OR circuit OR 1. The other input on the circuit OR 1 is a "read ticket" input, also called "read order input". The output from the circuit is connected to a second input on the counter KB and also to the input on a coupon queue memory KK in the form of a type 74LS193 counter.

When the output of the circuit NOR 2 is at low level, the read pulse to the second input on the circuit OR 1 is blocked by the output from the circuit OR 1 being put at constant high level via the inverting circuit I1. When said output from the circuit NOR 2 is low, it may be noted that the member does not give any "ticket out" when reading in the regulator member.

When the output of the circuit NOR 2 is at high level, i.e. when the regulator member desires to send a ticket signal, a zero signal is obtained on the mentioned first input to the circuit OR 1 via the invertor 11. Accordingly, blockage of the read order initiated by the IOS system on the second input of the circuit OR 1 ceases. Reading of the regulator member ticket output continues as long as the read plus is low. The value on the counters is not changed but if the value on the counter KK shows nine the "basket out" signal of the regulator member turns to low. When the mentioned read pulse goes high (assumes high level) the counter KB is stepped down one step, corresponding to a ticket being read out towards the job buffer or towards the transmitter ticket queue. The counter KK is simultaneously stepped up one step, corresponding to a coupon being clipped into the coupon basket memory. When the counter KK has arrived at the value 9 and the read order signal goes high instead, the counter is set to zero and its "basket out" signal also goes high. The counter KM is accordingly stepped down one step and the counter KB in the next regulator member is stepped up one step, corresponding to a basket having been moved from the basket queue KM to the coupon-ticket queue KB in the next member.

From what has been described it will be seen that not until a signal is simultaneously available in the basket queue memory KM and the coupon-ticket memory KB does a ticket signal go to the respective job buffer or to the ticket queue memory BM in the transmitter RP. The next regulator member in the chain obtains, as shown, "ticket in" signals from the preceding element corresponding to a full basket (ten coupons). Each coupon in the coupon basket of the next regulator member corresponds to ten coupons in the preceding members. At the program level corresponded by the next member, the jobs are accordingly executed in the job buffer associated with the member ten times less often than in the preceding member and buffer, corresponding to a higher program level.

The content of element N is illustrated in Figure 7, N being the element corresponding to the lowest program level. As will be seen from the figure, this member only comprises a type 74LS193 ticket counter KB 3, to the outputs of which are connected corresponding inputs on a NOT—OR circuit NOR 4 (corresponding to the circuit NOR 1 in Figure 6) the output of which is connected to the first input on a fifth NOT—OR circuit NOR 5 (corresponding to the circuit NOR 2 in Figure 6). A constant low logical level (zero) is connected to the second input on the circuit NOR 5. From this it will be seen that the member N on the lowest program level only switches through signals from the nearest higher regulating member to the job buffer JBN. This is also symbolically apparent from Figure 3. An OR circuit OR 2 and an inverting circuit 12 have the same function as described for the function according to Figure 6.

As is apparent from what has been described it is possible to build out the regulator to include several program levels, it also being possible to select capacity distribution between the different program levels.

Furthermore, it is possible to arrange the regulator such that only one regulator, comprising a plurality of regulator members, can process information for more than one regional processor RP.

**Claims**

1. Apparatus in a computer-controlled telecommunication system for carrying out load regulation with the aid of a queueing system for ensuring that in transmission of data information between a regional processor (RP) and a central processor (CP) all progam levels in said central processor are guaranteed a positive share of the processor capacity, the central processor containing a buffer memory (JB) for each of said program levels, characterized in that in the simultaneous presence of data information in a signal memory (SM) and ticket signals in a ticket counter (BM) storing the number of transferable data informations in a transmitting regional processor (RP), the data information is sent to said central processor (CP) via an associated buffer memory (JB) to a regulator unit (R) included in said central processor and comprising a plurality of regulator members (S—N), each of which corresponds to one of said buffer memories and to a given program level, such that said first regulator member (S) regulates execution on a higher program level than a second regulator member (S + 1) which regulates execution on a higher program level than said last member (N);

for traffic handling said first regulator member (S) receives via a first buffer memory (JBB) said data information and inputs a ticket signal for each data information into a first counter (KB 1), there also being a second counter (KM 1) and a third counter (KK 1) included in said regulator member, in response to if there being a ticket signal in said first and second counters (KB 1, KM 1) said first regulator member sending a ticket signal from the output of said counters to the input of said third counter and also a ticket signal to the input of said ticket counter (BM), in the transmitting regional processor in that when said third counter (KK 1) becomes full after receiving a predetermined number of ticket signals, said first regulator member (S) sets the counter (KK 1) to zero, removes a ticket signal from said second counter (KM 1) and furthermore sends a signal to the input on a fourth counter (KB 2) included in a successive second regulator member (S + 1), there being included in this member fifth and sixth counter (KM 2 and KK 2), in response to there being a ticket signal in said fourth and fifth counter (KB 2 and KM 2), said second regulator member sending a signal, from the fourth counter (KB 2) to the input on said sixth counter (KK 2) and also sending a signal to the input of a second buffer memory (JBC);

in that when said sixth counter (KK 2) becomes full after receiving a predetermined number of ticket signals, said second regulator member (S + 1) set this means to zero, removes a signal from said fifth counter (KM 2) and also sends a signal to the input on a seventh counter (KB 3) included in a last regulator member (N); and in response to there being a signal in said seventh counter, a signal is going to the input on a third buffer memory (JBD), whereon said first regulator member (S), on condition that said first buffer memory (JBB) is empty and that said signal to said second buffer memory (JBC) is first in this memory, receives said signal from the buffer memory (JBC) in said second counter (KM 1);

and in that said second regulator member (S + 1), on condition that said buffer memories (JBB and JBC) are empty and that said ticket signal to the third buffer memory (JBD) is first in the latter, receives said ticket signal from the buffer (JBD) in said fifth counter (KM 2).

2. Apparatus as claimed in claim 1, characterized in that said predetermined number of signals to said third counter (KK 1) and said sixth memory means (KK 2) is ten.

3. Apparatus as claimed in claim 1, characterized in that ten signals in said third counter (KK 1) correspond to one signal in said sixth counter (KK 2).

**Patentansprüche**

1. Vorrichtung in einem rechnergesteuerten Fernmeldesystem zum Ausführen einer Regulierung der Belastung mit Hilfe eines Warteschlangensystems zum Sicherstellen, daß bei der Übertragung von Dateninformation zwischen einem regionalen Prozessor (RP) und einem zentralen Prozessor (CP) alle Programmpegel in dem zentralen Prozessor garantiert ein positiver Anteil der Prozessorkapazität sind, wobei der zentrale Prozessor einen Pufferspeicher (JB) für jeden der Programmpegel enthält, dadurch gekennzeichnet, daß bei gleichzeitigem Vorhandensein von Dateninformation in einem Signalspeicher (SM) und Kartensignalen in einem Kartenzähler zum Speichern der Anzahl von übertragbaren Dateninformationen in einem übertragenden regionalen Prozessor (RP) die Dateninformation zu dem zentrallen Prozessor (CP) über einen zugehörigen Pufferspeicher (JB) zu einer Reguliereinheit (R) übertragen wird, welche in dem zentralen Prozessor enthalten ist und eine Vielzahl von Reguliergliedern (S—N) aufweist, von denen jedes einem der Pufferspeicher und einem gegebenen Programmpegel entspricht, derart, daß das erste Regulierglied (S) die Durchführung auf einem höheren Programmpegel als ein zweites Regulierglied (S + 1) reguliert, welches die Ausführung auf einem höheren Programmpegel als das letzte Glied (N) reguliert;

das erste Regulierglied (S) zur Verkehrsabwicklung über einen ersten Pufferspeicher (JBB) die Dateninformation erhält und für jede Dateninformation ein Kartensignal in einen ersten Zähler (KB1) eingibt, wobei in dem Regulierglied auch ein zweiter Zähler (KM1) und ein dritter Zähler (KK1) enthalten ist, das erste Regulierglied im Ansprechen darauf, ob ein Kartensignal in dem ersten und zweiten Zähler (KB1, KM1) vorhanden ist, ein Kartensignal von dem Ausgang der genannten Zähler zu dem Eingang des dritten Zählers und auch ein Kartensignal zu dem Eingang des Kartenzählers (BM) in dem übertragenden regionalen Prozessor (RP) überträgt, daß, wenn der dritte Zähler (KK1) nach dem Empfang einer vorbestimmten Anzahl von Kartensignalen voll wird, das erste Regulierglied (S) den Zähler (KK1) auf Null setzt, ein Kartensignal von dem zweiten Zähler (KM1) entfernt und weiter ein Signal zu dem Eingang an einem vierten Zähler (KB2) sendet, welcher in einem folgenden zweiten Regulierglied (S + 1) enthalten ist, wobei in diesem Glied ein fünfter und sechster Zähler (KM2 und KK2) enthalten sind, und im Ansprechen darauf, daß ein Kartensignal in dem genannten vierten und fünften Zähler (KB2 und KM2) ist, das zweite Regulierglied ein Signal von dem vierten Zähler (KB2) zum Eingang an dem sechsten Zähler (KK2) und auch ein Signal zu dem Eingang eines zweiten Pufferspeichers (JBC) sendet;

daß, wenn der sechste Zähler (KK2) nach dem Empfangen einer vorbestimmten Anzahl von Kartensignal voll wird, das zweite Regulierglied (S + 1) diese Einrichtung auf Null setzt, ein Signal von dem fünften Zähler (KM2) entfernt und auch ein Signal zu dem Eingang an einem siebenten Zähler (KB3) sendet, welcher in einem letzten Regulierglied (N) enthalten ist, und ein Signal im Ansprechen darauf, daß ein Signal in dem genannten siebenten Zähler ist, zu dem Eingang an einen dritten Pufferspeicher (JBD) geht, worauf das erste Regulierglied (S) unter der Bedingung daß der erste Pufferspeicher (JBB) leer ist und daß das genannte Signal zu dem zweiten Pufferspeicher (JBC) das erste in diesem Speicher ist, das genannte Signal von dem Pufferspeicher (JBC) in dem zweiten Zähler (KM1) empfängt;

und daß das zweite Regulierglied (S + 1), unter der Bedingung, daß die Pufferspeicher (JBB und JBC) leer sind und daß das Kartensignal zum dem dritten Pufferspeicher (JBD) das erste in dem letzteren ist, das Kartensignal von dem Pufferspeicher (JBD) in dem fünften Zähler (KM2) empfängt.

2. Vorrichtung nach Anspruch 1, dadurch gekennzeichnet, daß die vorbestimmte Anzahl von Signalen zu dem dritten Zähler (KK1) und der genannten sechsten Speichereinrichtung (KK2) zehn ist.

3. Vorrichtung nach Anspruch 1, dadurch gekennzeichnet, daß zehn Signale in dem dritten Zähler (KK1) einem Signal in dem sechsten Zähler (KK2) entsprechen.

**Revendications**

1. Dispositif dans un système de télécommunication commandé par ordinateur, pour la réalisation d'un réglage de la charge au moyen d'un système de file d'attente afin d'assurer qu'en cas d'une transmission des données d'information entre un processeur régional (RP) et un processeur central (CP), tous les niveaux de programme dans ledit processeur central seront certainement une partie positive de la capacité du processeur, ledit processeur comprenant une mémoire tampon (JP) pour chacun desdits niveaux de programme, caractérisé en ce qu'au cas où des données d'information sont présentes concurremment dans une mémoire des signaux (SM) et des signaux de cartes dans un dispositif compte-cartes pour la mémorisation du nombre des données d'information transmissibles dans un processeur régional transmettant (RP), lesdites données d'information sont transmises à un processeur central (CP) en passant par une mémoire tampon associée (JB) à un dispositif de réglage (R) compris dans ledit processeur central et comprenant une pluralité des circuits de réglage (S—N) dont chacun correspond à une des mémoires tampons et à un niveau de programme défini, d'une manière que le premier circuit de réglage (S) règle la réalisation à un niveau de programme au-dessus du niveau de programme d'un deuxième circuit de réglage (S1) qui règle la réalisation à un niveau de programme plus haut que celui du dernier circuit (N);

que le premier circuit de réglage (S) pour l'écoulement de trafic reçoit les données d'information par un première mémoire tampon (JBB) et introduit un signal de carte pour chaqune des données d'information dans un premier compteur (KB1), ledit circuit de réglage comprenant de même un deuxième compteur (KM1) et un troisième compter (KK1), qu'en réponse à la condition s'il y ait un signal de carte dans le premier et le deuxième compteur (KB1, KM1) ou non, le premier circuit de réglage transmet un signal de carte de la sortie desdits compteurs à l'entrée dudit troisième compteur et de même un signal de carte à l'entrée du compteur de cartes (BM) dans ledit processeur régional transmettant (RP); que le premier circuit de réglage (S) amène ledit compteur (KK1) au zéro, enlève un signal de carte dudit deuxième compteur (KM1) et de plus transmet un signal à l'entrée à un quatrième compteur (KB2) compris dans un deuxième circuit contigu (S + 1), quand le troisième compteur (KK1) devient rempli après la réception d'une quantité définie des signaux de carte, ledit deuxième circuit de réglage comprenant un cinquième et sixième compteur (KM2, KK2), et qu'en réponse à la condition qu'il y a un signal de carte dans ledit quatrième et cinquième compteur (KB2 et KM2), ledit circuit de réglage transmet un signal dudit quatrième compteur (KB2) à l'entrée audit sixième compteur (KK2) et de même un signal à l'entrée d'une deuxième mémoire tampon (JBC);

qu'au cas où ledit sixième compteur (KK2), ayant reçu une quantité définie des signaux de carte, devient rempli, le deuxième circuit de réglage (S + 1) amène ledit dispositif au zéro, enlève un signal dudit cinquième compteur (KM2) et de même transmet un signal à l'entrée d'un septième compteur (KB3) compris dans un dernier circuit de réglage (N), et qu'en réponse à la condition qu'un signal se trouve dans ledit septième compteur, un signal est transmis à l'entrée d'une troisième mémoire tampon (JBD), aprés quoi le premier circuit de réglage (S) reçoit ledit signal provenant de la mémoire tampon (JBC) dans ledit deuxième compteur (KM1) à condition que la première mémoire tampon (JBB) soit vide et que ledit signal à ladite deuxième mémoire tampon (JBC) soit le premier dans cette mémoire;

et que ledit deuxième circuit de réglage (S + 1) reçoit le signal de carte provenant de ladite mémoire tampon (JBD) dans ledit cinquième compteur (KM2) à condition que lesdites mémoires tampons (JBB et JBC) soient vides et que le signal de carte transmis à ladite troisième mémoire tampon (JBD) soit le premier signal dans la dernière.

2. Dispositif selon la revendication 1, caractérisé en ce que la quantité définie des signaux transmis audit troisième compteur (KK1) et audit sixième dispositif mémoire tampon (KK2) s'élève à dix.

3. Dispositif selon la revendication 1, caractérisé en ce que dix signaux dans ledit troisième compteur (KK1) correspondent à un signal dans ledit sixième compteur (KK2).

*Fig. 1*

*Fig. 2*

Fig. 3

*Fig. 4*

*Fig. 7*

3

Fig. 5

Fig. 6

Ticket in

Read command

Ticket out

Basket in

Basket out